# EUROPEAN PATENT SPECIFICATION

(11) **EP 2 031 269 B1**
(45) Date of publication and mention of the grant of the patent: **24.11.2010**
(21) Application number: 08010948.1
(22) Date of filing: 17.06.2008
(51) Int. Cl.: F16F 9/36

(54) **Sealing apparatus for reciprocrating shaft**
Dichtungsvorrichtung eines Kolbens
Appareil d'étanchéité pour tige à mouvement alternatif

(30) Priority: 31.08.2007 JP 2007226000
(43) Date of publication of application: 04.03.2009
(73) Proprietor: Carl Freudenberg KG, 69469 Weinheim (DE)
(72) Inventor: Otani, Takeo, Fukushima-shi Fukushima 960-1193 (JP)

(56) References cited:
- WO-A1-2006/033202
- JP-A- 11 063 072
- JP-A- 2007 064 234
- US-A- 6 102 409

## Description

### Background of the Invention

### Field of the Invention

This invention relates to a sealing apparatus for a reciprocating shaft, which seals a shaft periphery of the reciprocating shaft, for example, a piston rod of a hydraulic shock absorber or the like.

### Description of the Related Art

As a typical prior art of the sealing apparatus for the reciprocating shaft which is used as a shaft periphery sealing means of a piston rod or the like of a hydraulic shock absorber (a front fork or a rear cushion) in a two-wheeled vehicle, for example, there has been known a structure described in Japanese Unexamined Patent Publication No. 11-63072.

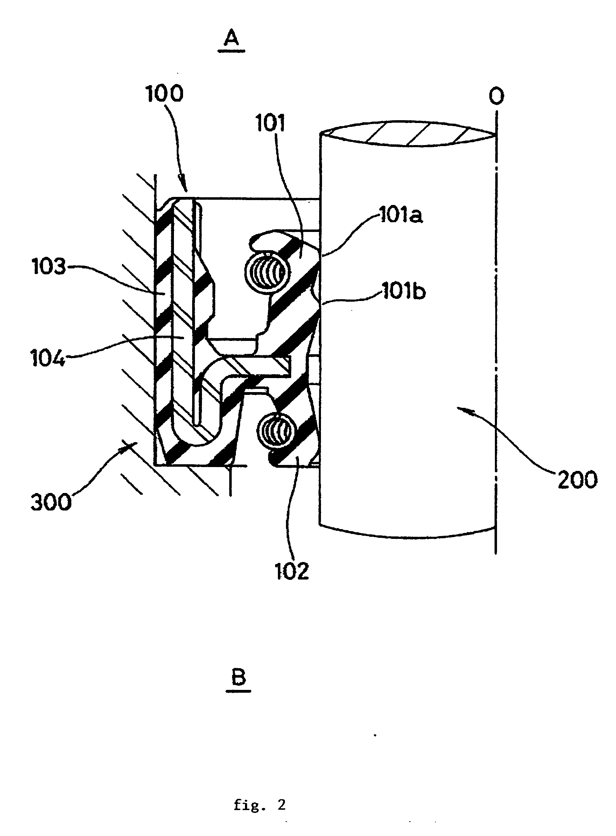

Fig. 2 is a one side cross sectional view showing the same kind of conventional sealing apparatus for the reciprocating shaft as that described in the Japanese Unexamined Patent Publication No. 11-63072 by cutting along a plane passing through an axis O. In other words, a sealing apparatus 100 has an oil rip 101 and a dust lip 102 which are integrally formed by a rubber-like elastic material in an inner peripheral portion of a metal ring 104, and an outer peripheral seal portion 103 which is integrally formed by a rubber-like elastic material in an outer peripheral portion of the metal ring 104. Further, the outer peripheral seal portion 103 is pressure inserted and fixed to an inner peripheral surface of an end portion of a housing 300 of a hydraulic shock absorber, and the oil lip 101 is slidably brought into close contact with an outer peripheral surface of a piston rod 200, thereby preventing a working fluid in an inner space A of the hydraulic shock absorber from flowing out to an outer space B. The dust lip 102 is structured such as to be slidably brought into close contact with the outer peripheral surface of the piston rod 200, thereby preventing a foreign material from making an intrusion into the inner space A of the hydraulic shock absorber from the outer space B.

In this case, a basic function required in the front fork and the rear cushion of the two-wheeled vehicle is to generate a suitable damping force against an input of an impact or an oscillation and to maintain the performance. On the contrary, the sealing apparatus 100 is designed by attaching importance to a sealing performance and a pressure resistance. Accordingly, an inner peripheral surface of the oil rip 101 is formed as a shape having a main edge 101a in the vicinity of a leading end and a sub edge 101b positioned closer to the dust rip 102 side than the main edge 101a.

However, a requirement for improving a ride quality is increased in recent years in the two-wheeled vehicle in the same manner as a four-wheeled vehicle. Specifically, it is required to reduce an impact (a shock feeling) at a time of getting over a step and a cloggy feeling caused by concavity and convexity of a road surface. Accordingly, in the sealing apparatus 100, it is necessary to intend to reduce a friction force of the oil lip 101 and the dust lip 102 with respect to the piston rod 200, however, if the sub edge 101b is provided on the inner peripheral surface of the oil lip 101 for improving the sealing performance and the pressure resistance, in addition to the main edge 101a, there has been a problem that a friction force becomes higher.

Another sealing apparatus according to the pre-amble of claim 1, is disclosed in document WO 2006/033202 A1.

### Summary of the Invention

The present invention is made by taking the point mentioned above into consideration, and a technical problem of the present invention is to provide a sealing apparatus for a reciprocating shaft which satisfies both an excellent sealing performance and pressure resistance, and a reduction of a friction force.

As a means for effectively solving the technical problem mentioned above, in accordance with the present invention, there is provided a sealing apparatus for a reciprocating shaft sealing an outer periphery of the shaft which is relatively movable in an axial direction, wherein the sealing apparatus is provided with an oil lip and a dust lip directed in an opposite side with each other in the axial direction, a main edge brought into close contact with an outer peripheral surface of the shaft and a sub edge brought into close contact with the outer peripheral surface of the shaft in a root side of the oil lip are formed in an inner peripheral surface of the oil lip, the inner peripheral surfaces of the oil lip and the dust lip are coated with a PTFE film, and a rough surface is formed in a region of the inner peripheral surface of the sub edge, in the PTFE film. In this case, the PTFE is an abbreviated expression of a polytetrafluoroethylene (tetrafluoroethylene resin).

In the structure mentioned above, the main edge of the oil lip is structured such as to achieve a seal against a working fluid in an innermost side, the sub edge is structured such as to achieve a seal against the working fluid passing through a sliding portion of the main edge toward an outer side as well as supporting a middle portion of the oil lip from an inner peripheral side, and the dust lip is structured such as to shut off an intrusion of a foreign material from the outer portion.

Since the PTFE film coated on the inner peripheral surfaces of the oil lip and the dust lip has a significantly low friction coefficient, a friction force is effectively reduced even in a reciprocating motion at a small stroke at which a sufficient lubricating oil film is hard to be formed on the sliding surface between the oil lip and the shaft. Further, since an oil lubricating film tends to be retained in a micro concavity and convexity formed by a rough surface process on the inner peripheral surface of the sub edge coated by the PTFE film, and an abrasion of the inner peripheral surface of the sub edge is suppressed due to a low friction, the micro concavity and convexity is hard to be worn out, and the friction lowering effect can be maintained for a long term. Accordingly, in spite that the inner peripheral surface of the oil lip is formed as the two-stage edge including the main edge and the sub edge for improving the sealing performance, the friction force can be sufficiently lowered.

In accordance with the sealing apparatus for the reciprocating shaft on the basis of the present invention, an excellent sealing performance can be achieved by forming the main edge and the sub edge on the inner peripheral surface of the oil lip, and the friction force is lowered on the basis of a cooperation of a self-lubricating performance provided by the PTFE film coated on the inner peripheral surfaces of the oil lip and the dust lip and a lubricating oil film retaining effect generated by the rough surface formed in the sub edge of the oil lip. Accordingly, it is possible to achieve an excellent sealing performance and a reduction of the friction force.

### Brief Description of the Drawings

Fig. 1 is a one side cross sectional view showing a best mode of a sealing apparatus for a reciprocating shaft in accordance with the present invention by cutting along a plane passing through an axis O; and
Fig. 2 is a one side cross sectional view showing a conventional sealing apparatus for a reciprocating shaft by cutting along a plane passing through an axis O.

### Description of the Preferred Embodiment

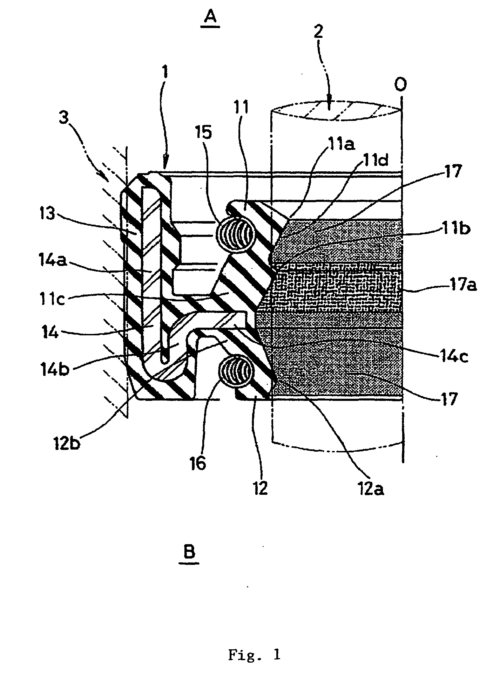

A description will be given below of a sealing apparatus for a reciprocating shaft in accordance with the present invention with reference to the accompanying drawings. Fig. 1 is a one side cross sectional view showing a best mode of a sealing apparatus for a reciprocating shaft in accordance with the present invention by cutting along a plane passing through an axis O.

As shown in Fig. 1, a sealing apparatus for a reciprocating shaft (hereinafter, refer simply to as a sealing apparatus) 1 in accordance with the present invention is provided with a metal ring 14, an oil lip 11 and a dust lip 12 which are integrally formed by a rubber-like elastic material in an inner peripheral portion of the metal ring 14 and are directed in an opposite side in an axial direction to each other, an outer peripheral seal portion 13 which is integrally formed in an outer peripheral portion of the metal ring 14 by the rubber-like elastic material, and extension springs 15 and 16 which are installed to outer peripheries of the oil lip 11 and the dust lip 12. The oil lip 11, the dust lip 12 and the outer peripheral seal portion 13 are vulcanized and bonded to the metal ring 14 at the same time of a vulcanizing formation, by positioning and setting the metal ring 14 to which a vulcanizing adhesive agent is previously applied, within a metal mold (not shown), and filling an unvulcanized rubber material for forming within an annular cavity defined between the metal ring 14 and an inner surface of the metal mold by mold clamping so as to heat and pressurize.

The metal ring 14 is a press molded product of a metal, and is constituted by an outer peripheral tube portion 14a, a fold-back portion 14b extending as a shape which is folded back approximately in a U-shaped cross sectional form to an inner peripheral side from one end (an end portion directed to an outer space B side in an installed state) in an axial direction, and an inner peripheral flange portion 14c extending to an inner peripheral side while forming a planer shape which is orthogonal to an axis O from the fold-back portion 14b.

The oil lip 11 extends approximately as a conical tubular shape in which a leading end is small in diameter, from the inner peripheral flange portion 14c of the metal ring 14 toward an opposite side to the fold-back portion 14b, and has a main edge 11a positioned near the leading end, and a sub edge 11b positioned in the middle portion of the oil lip 11. The main edge 11 a and the sub edge 11b are formed in an inner periphery of the oil lip so as to continuously protrude in a circumferential direction while forming approximately a V-shaped cross sectional form.

The dust lip 12 is structured such that a root 12b is connected to the root 11c of the oil lip 11 via an inner peripheral side of the inner peripheral flange portion 14c of the metal ring 14, extends from the root 12b toward an opposite side to the oil lip 11 so as to form approximately a conical tubular shape in which a leading end is small in diameter, and is structured such that a seal edge 12a against the dust formed as an R-shaped convex surface is formed in an inner periphery in the vicinity of the leading end so as to continuously protrude in a circumferential direction.

The outer peripheral seal portion 13 is formed in such a manner as to enwrap the outer peripheral tube portion 14a and the fold-back portion 14b of the metal ring 14, and an inner peripheral portion thereof extends along the inner peripheral flange portion 14c of the metal ring 14, and is connected to the roots 11c and 12b of the oil lip 11 and the dust lip 12.

Extension springs 15 and 16 are structured by annularly connecting coil springs made of metal, are respectively fitted and attached to a groove portion formed in an outer peripheral side of the main edge 11 a in the oil lip 11 and a groove portion formed in an outer peripheral side of the seal edge 12a against the dust in the dust lip 12, and compensate a tension force and a tracking performance of the oil lip 11 and the dust lip 12.

The inner peripheral surfaces of the oil lip 11 and the dust lip 12 are coated by a polytetrafluoroethylene (PTFE) film 17 from the main edge 11 a in the oil lip 11 to the seal edge 12a against the dust in the dust lip 12, and a satin finished rough surface 17a is formed in a region of the inner peripheral surface of the sub edge 11b in the oil lip 11, in the coating surface by the PTFE film 17. In other words, the inner peripheral surface of the sub edge 11b is structured such that a surface roughness thereof is significantly large in comparison with the PTFE film 17 of the other portions.

In this case, a rough surface 17a of the PTFE film 17 is structured such that the surface of the sub edge 11b made of the rubber-like elastic material is formed as a roughened shape in the process of integrally forming the oil lip 11, the dust lip 12 and the outer peripheral seal portion 13 in the metal ring 14 previously, and a concavo-convex surface copying a surface concavity and convexity of the rubber-like elastic material is formed on the PTFE film 17 which is coated on the surface of the sub edge 11b.

The sealing apparatus 1 provided with the structure mentioned above is used as a shaft peripheral seal means of the piston rod 2 of the hydraulic shock absorber, for example, the front fork, the rear cushion or the like in the two-wheeled vehicle. Further, the outer peripheral seal portion 13 is pressure inserted and fixed to the inner peripheral surface of the housing 3 of the hydraulic shock absorber with a suitable collapsing margin in such a manner that the oil lip 11 is directed to the inner space A, and the main edge 11a, the sub edge 11 b and the seal edge 12a against the dust which are formed in the inner peripheries of the oil lip 11 and the dust lip 12 are slidably brought into close contact with the outer peripheral surface of the piston rod 2 which is inserted to the inner portion of the front fork from the inner periphery of the housing 3 so as to be relatively movable in the axial direction. In this case, the piston rod 2 corresponds to the shaft described in claim 1.

The oil lip 11 is structured such that the main edge 11a formed in the inner periphery is slidably brought into close contact with the outer peripheral surface of the piston rod 2 with the suitable fastening margin, thereby sealing the working fluid in the inner space A of the hydraulic shock absorber. Further, the dust lip 12 is structured such that the seal edge 12a against the dust is slidably brought into close contact with the outer peripheral surface of the piston rod 2 with the suitable fastening margin, thereby preventing the foreign material from making an intrusion into the inner space A from the outer space B.

The sub edge 11b in the oil lip 11 has a function of scraping off the working fluid passing through the sliding portion of the main edge 11a toward the upper side from the inner space A in a state in which the sub edge 11b is attached to the outer peripheral surface of the piston rod 2, in the case that the piston rod 2 is moved to a lower side in Fig. 1. The scraped working fluid intervenes to the sliding portion of the main edge 11a from an inclined surface 11 d having a small angle of contact with respect to the outer peripheral surface of the piston rod 2 so as to pass therethrough in the process of moving to the upper side in Fig. 1 of the piston rod 2, and is returned to the inner space A. Further, since the sub edge 11b bears an intermediate portion in the axial direction of the oil lip 11 from the inner peripheral side, the sub edge 11b has a function of preventing a whole of the inner peripheral surface of the oil lip 11 from coming into full contact with the outer peripheral surface of the piston rod 2 by a pressure (an internal pressure) of the inner space A.

Further, the PTFE film 17 coated on the inner peripheral surfaces of the oil lip 11 and the dust lip 12 is structured such that a friction coefficient is significantly low. Accordingly, even in a reciprocating motion at a small stroke in which the sufficient lubricating oil film is hard to be formed on the sliding surface between the oil lip 11 and the piston rod 2 by the working fluid, the friction force is effectively lowered. Further, the lubricating oil film generated by a part of the working fluid tends to be retained with respect to the outer peripheral surface of the piston rod 2, by the satin finished rough surface 17a formed in the region of the inner peripheral surface of the sub edge 11b in the oil lip 11 in the PTFE film 17. Accordingly, the friction force generated by the sliding motion with respect to the outer peripheral surface of the piston rod 2 is significantly lowered, by the cooperation of the self-lubricating performance provided by the PTFE film 17 and the lubricating oil film retaining effect generated by the rough surface 17a formed in the PTFE film 17.

In this case, since the rough surface 17a is provided in the region of the inner peripheral surface of the sub edge 11b in the outer side of the main edge 11a, in place of the inner peripheral surface of the main edge 11a, the reduction of the sealing performance by the rough surface 17a is suppressed small. Preferably, as a result that the friction force at a time when the piston rod 2 slides with the outer peripheral surface is significantly lowered, it is possible to prevent an oscillation of the oil lip 11 and the dust lip 12 caused by a stick slip phenomenon going with the sliding motion of the main edge 11a, the sub edge 11b and the seal edge 12a against the dust. Accordingly, it is possible to intend to improve the sealing performance.

Further, since the abrasion of the PTFE film 17 is suppressed by the low friction of the PTFE film 17, and the PTFE film 17 itself has the abrasion resistance, the micro concavity and convexity generated by the rough surface 17a is hard to be worn out. Accordingly, the abrasion reducing effect caused by the lubricating oil film retaining effect is maintained for a long term.

In this case, in the embodiment mentioned above, the rough surface 17a is formed as the satin finished shape, however, may be formed by infinitude of micro striations or the like.

## Claims

1. A sealing apparatus (1, 100) for a reciprocating shaft sealing an outer periphery of the shaft (2, 200) which is relatively movable in an axial direction, **characterized in that** the sealing apparatus (1, 100) is provided with an oil lip (11, 101) and a dust lip (12, 102) directed in an opposite side with each other in the axial direction, a main edge (11a, 101a) brought into close contact with an outer peripheral surface of the shaft (2, 200) and a sub edge (11b, 101b), brought into close contact with the outer peripheral surface of the shaft (2, 200) in a root side of the oil lip (11, 101),are formed in an inner peripheral surface of the oil lip (11, 101), the inner peripheral surfaces of the oil lip (11, 101) and the dust lip (12,102) are coated with a PTFE film (17), and a rough surface (17a) is formed in a region of the inner peripheral surface of the sub edge (11b, 101b) in the PTFE film (17).

## Patentansprüche

1. Dichtungsvorrichtung (1, 100) für eine hin- und hergehende Welle, die einen Außenumfang der Welle (2, 200) abdichtet, die relativ in einer Axialrichtung beweglich ist, **dadurch gekennzeichnet, dass** die Dichtungsvorrichtung (1, 100) mit einer Öllippe (11, 101) und einer Staublippe (12, 102) versehen ist, die in der Axialrichtung auf einander gegenüberliegenden Seiten ausgerichtet sind, ein Hauptrand (11a, 101a), der in engen Kontakt mit einer Außenumfangsfläche der welle (2, 200) gebracht ist, und ein Nebenrand (11b, 101b), der auf einer Fußseite der Öllippe (11, 101) in engen Kontakt mit der Außenumfangsfläche der Welle (2, 200) gebracht ist, in einer Innenumfangsfläche der Öllippe (11, 101) ausgebildet sind, die Innenumfangsfläche der Öllippe (11, 101) und der Staublippe (12, 102) mit einem PTFE-Film (17) beschichtet sind und eine raue Fläche (17a) in einem Bereich der Innenumfangsfläche des Nebenrands (11b, 101b) im PTFE-Film (17) ausgebildet ist.

## Revendications

1. Appareil d'étanchéité (1, 100) pour un arbre à mouvement alternatif scellant une périphérie extérieure de l'arbre (2, 200) qui peut se déplacer relativement dans une direction axiale, **caractérisé en ce que** l'appareil d'étanchéité (1, 100) est pourvu d'une lèvre à huile (11, 101) et d'une lèvre à poussière (12, 102) orientées vers un côté opposé l'une de l'autre dans la direction axiale, un bord principal (11a, 101a), amené en contact étroit avec une surface périphérique extérieure de l'arbre (2, 200) et un sous-bord (11b, 101b) amené en contact étroit avec la surface périphérique extérieure de l'arbre (2, 200) dans un côté de base de la lèvre à huile (11, 101), étant formés dans une surface périphérique intérieure de la lèvre à huile (11, 101), les surfaces périphériques intérieures de la lèvre à huile (11, 101) et de la lèvre à poussière (12, 102) étant revêtues d'un film de PTFE (17), et une surface rugueuse (17a) étant formée dans une région de la surface périphérique intérieure du sous-bord (11b, 101b) dans le film de PTFE (17).
